# DEMANDE DE BREVET EUROPEEN

(11) **EP 3 315 367 A1**
(43) Date de publication de la demande: **02.05.2018**
(21) Numéro de dépôt: 17197055.1
(22) Date de dépôt: 18.10.2017
(51) Int. Cl.: B60S 1/34, B60S 1/52

(54) **BRAS PORTE-BALAI PANTOGRAPHE**

(30) Priorité: 28.10.2016 FR 1660545
(71) Demandeur: Valeo Systèmes d'Essuyage, 78322 Le Mesnil Saint Denis (FR)
(72) Inventeur: CAILLOT, Gérald, 78322 LE MESNIL SAINT DENIS (FR)
(74) Mandataire: Valeo Systèmes d'Essuyage

(57) **Abrégé**

L'invention concerne un bras porte-balai (10) pantographe pour porter un balai d'essuie-glace de véhicule, comportant :
- deux tiges (12a, 12b) longitudinales, respectivement une tige principale (12a) et une tige secondaire (12b), lesdites tiges comportant des extrémités longitudinales articulées sur une pièce (14) de liaison du bras porte-balai,
- un dispositif (30) de distribution d'un liquide lave-glace comprenant un organe fixe (32).

Selon l'invention le dispositif de distribution (30) comprend en outre un organe mobile (34) vis-à-vis de l'organe fixe, l'organe mobile étant configuré pour être déplacé par au moins une surface d'appui, un déplacement de l'organe mobile (34) permettant une distribution du liquide lave-glace.

## Description

### DOMAINE TECHNIQUE

La présente invention concerne le domaine des systèmes d'essuyage pour véhicules, et plus particulièrement un bras porte-balai pantographe (c'est-à-dire conçu pour présenter une cinématique pantographe lorsqu'il est actionné selon un mouvement de va-et-vient) ainsi qu'un essuie-glace d'un pare-brise de véhicule, en particulier automobile, comportant un tel bras porte-balai et un balai d'essuie-glace. L'invention est destinée, notamment mais non exclusivement, à équiper les véhicules automobiles comportant un pare-brise panoramique.

### ETAT DE L'ART

On sait que les pare-brise panoramiques comprennent généralement des portions à faible courbure telles que la portion centrale et des portions à forte courbure telles que les portions situées aux extrémités des pare-brise. Un essuyage efficace permettant notamment d'atteindre toutes les portions des pare-brise panoramiques ne peut donc être réalisé en utilisant un essuie-glace classique pour lequel la trajectoire du balai est circulaire sur toute la surface du pare-brise.

Un essuie-glace de type pantographe permet d'optimiser l'efficacité du balayage en accédant à toutes les portions du pare-brise panoramique grâce à sa structure et à sa cinématique pantographe spécifiques qui permettent d'imprimer au balai d'essuie-glace une trajectoire non circulaire sur au moins certaines portions du pare-brise, dont notamment ces portions situées aux extrémités. Un essuie-glace de ce type comporte généralement un bras porte-balai comprenant deux tiges sensiblement parallèles l'une par rapport à l'autre en position de repos, qui s'étendent sensiblement dans le même plan, et un balai généralement monté mobile en pivotement par rapport au bras.

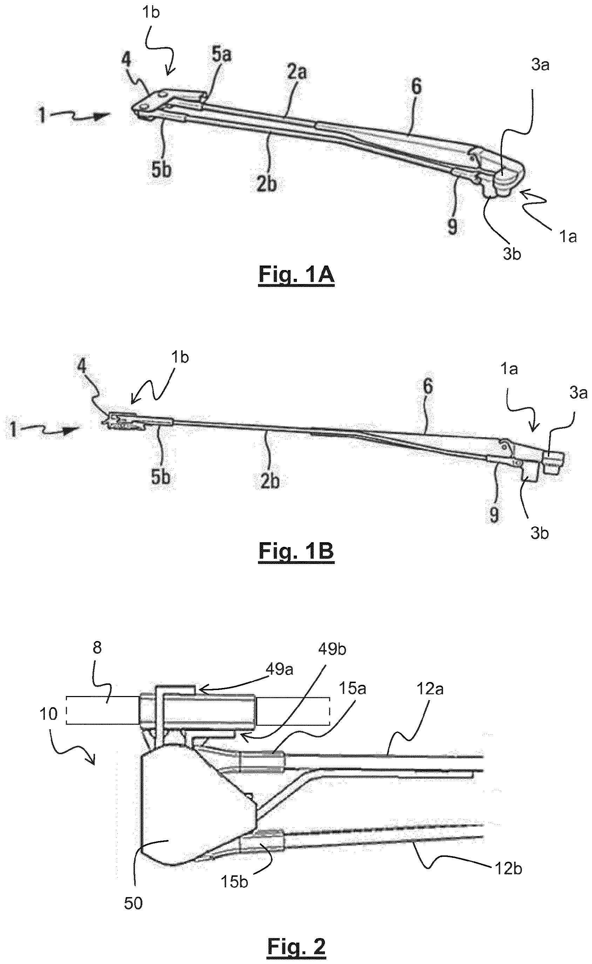

Plus précisément, à titre d'exemple, tel que cela est représenté sur les figures 1A et 1B, un essuie-glace de type pantographe comporte généralement un bras porte-balai 1 comprenant une tige principale 2a et une tige secondaire 2b axées longitudinalement, sensiblement parallèles l'une par rapport à l'autre en position de repos, et qui s'étendent, au moins partiellement, dans le même plan.

Le bras 1 est mobile en rotation. Pour cela, le bras 1 comporte à sa première extrémité longitudinale 1a au moins un pivot 3a, dit premier pivot, lui permettant de pivoter généralement autour d'un axe sensiblement perpendiculaire à un plan grossièrement défini par la surface à nettoyer.

La tige principale 2a et la tige secondaire 2b sont reliées d'une part à la première extrémité longitudinale 1a du bras 1 et d'autre part à une deuxième extrémité longitudinale 1 b du bras 1. En l'espèce, la tige principale 2a est reliée à la première extrémité longitudinale 1a du bras 1 au dispositif d'un manchon 6 et la tige secondaire 2b est reliée à cette première extrémité 1a par l'intermédiaire d'un deuxième pivot 3b et d'un manchon 9.

Le bras 1 comporte à sa deuxième extrémité longitudinale 1 b au moins une pièce de liaison 4 permettant d'une part de relier entre elles les deux tiges 2a, 2b, et d'autre part de connecter un balai d'essuie-glace (non représenté). Cette pièce de liaison 4 est fixée aux tiges 2a, 2b par l'intermédiaire de deux manchons 5a, 5b conformés de façon à pouvoir y introduire l'une des extrémités desdites tiges 2a, 2b et les fixer par sertissage. Les tiges sont, par exemple, de forme rectangulaire présentant une section de 9mm sur 4mm, les manchons 6, 9, 5a, 5b présentent alors des formes complémentaires.

La tige secondaire 2b est reliée à la pièce de liaison 4 par l'intermédiaire du manchon 5b.

Un moteur électrique (non représenté) permet d'assurer le pivotement du bras 1 par l'intermédiaire du premier pivot 3a ce qui génère un mouvement de balayage alterné, le deuxième pivot 3b restant libre.

Par ailleurs, les essuie-glaces sont en général associés à des dispositifs de projection de liquide lave-glace sur le pare-brise du véhicule. Ces dispositifs de projection peuvent être situés sur le capot, sur la grille de baie de pare-brise ou, dans une version plus récente, sur les balais d'essuie-glace, ceci en particulier pour les balais de type plat ou « flat blade » en anglais, c'est-à-dire, pour les balais présentant par eux-mêmes un cintrage leur permettant d'être montés sur les bras sans l'intermédiaire d'étriers ou de palonniers. Les dispositifs de projection sont reliés à une pompe et à un réservoir de liquide lave-glace.

Dans le cas de dispositifs de projection intégrés au balai d'essuie-glace, le liquide lave-glace doit être acheminé jusqu'à ces dispositifs de projection par des tuyaux fixés au bras. Les dispositifs de projection comprennent par exemple une rampe d'arrosage s'étendant le long d'un des côtés du balai d'essuie-glace (balai d'essuie-glace mono-rampe) ou deux rampes d'arrosage s'étendant respectivement des deux côtés du balai d'essuie-glace (balai d'essuie-glace bi-rampe). Les dispositifs de projection doivent être associés à des dispositifs de distribution qui permettent notamment de contrôler leur alimentation en liquide lave-glace en fonction du sens de déplacement du balai d'essuie-glace. Dans le cas d'un balai d'essuie-glace bi-rampe, du liquide est projeté d'un côté du balai d'essuie-glace, au dispositif d'une première rampe d'arrosage, lorsque le balai d'essuie-glace se déplace dans le sens montant, et du côté opposé du balai d'essuie-glace, au dispositif de la deuxième rampe d'arrosage, lorsque le balai d'essuie-glace se déplace dans le sens descendant. Le liquide est projeté en avant du balai d'essuie-glace (par référence à son sens de déplacement) de façon à ce qu'il soit étalé et retiré dès qu'il se dépose sur le pare-brise. Ceci évite que la vision, que le conducteur a de son environnement, ne soit perturbée par la projection de liquide sur le pare-brise.

Dans la technique actuelle, la fonction de distribution du liquide lave glace est assurée par le moteur d'actionnement du bras, le module de commande du véhicule, ou par une bi-pompe. Cependant, ces technologies sont relativement coûteuses et complexes à mettre en oeuvre.

La présente invention propose une solution simple, efficace et économique à ce problème.

Il est connu du document FR3007363 un bras porte-balai à cinématique pantographe comprenant un dispositif de distribution de lave glace distribuant du liquide lave glace en fonction de l'angle formé entre une des tiges et la pièce de liaison. La distribution de liquide lave glace se fait uniquement par les mouvements relatifs entre la tige et la pièce de liaison. Le liquide lave glace est alors pomper dans le réservoir de liquide lave glace par une pompe actionnée par le déplacement relatif des tiges.

La présente invention propose une solution alternative à l'art antérieur.

### EXPOSE DE L'INVENTION

L'invention propose un bras porte-balai pantographe pour porter un balai d'essuie-glace de véhicule, comportant au moins :
- deux tiges longitudinales, respectivement une tige principale et une tige secondaire, lesdites tiges comportant des extrémités longitudinales articulées sur une pièce de liaison du bras porte-balai,
- un dispositif de distribution d'un liquide lave-glace comprenant un organe fixe, caractérisé en ce que le dispositif de distribution comprend un organe mobile vis-à-vis de l'organe fixe, l'organe mobile étant configuré pour être déplacé par l'intermédiaire d'une surface d'appui, un déplacement de l'organe mobile permettant une distribution du liquide lave-glace.

L'invention propose ainsi une alternative pour assurer la fonction de distribution du liquide lave-glace pour un bras porte-balai pantographe, cette technologie consistant notamment à utiliser la cinématique pantographe particulière du bras porte-balai pour activer ou désactiver (voire ouvrir ou fermer) la distribution du liquide par l'intermédiaire d'une surface d'appui.

La connexion hydraulique entre l'entrée et la sortie du circuit assure l'activation ou l'ouverture du circuit. Au contraire, le circuit est désactivé ou fermé lorsque l'entrée et la sortie du circuit ne sont pas connectées. Dans le cas où une pompe d'alimentation en liquide lave-glace est actionnée, l'ouverture du circuit hydraulique entraîne la circulation de liquide dans le circuit, depuis son entrée jusqu'à sa sortie.

Selon l'invention, les dispositifs de distribution de liquide lave-glace comprennent deux organes, respectivement fixe et mobile. L'organe fixe ou premier organe est porté par la pièce de liaison ou l'une des tiges. L'organe mobile ou second organe coopère avec au moins une des tiges ou avec un élément porté par une des tiges, pour être déplacé d'une position à une autre vis-à-vis de l'organe fixe. Cette coopération entre l'organe mobile et une des tiges est soit directe soit indirecte et se fait, dans ce dernier cas, par l'intermédiaire dudit élément.

Avantageusement, l'organe mobile peut adopter au moins deux et de préférence au moins trois positions distinctes vis-à-vis de l'organe fixe, avec notamment une ou deux positions dans laquelle il autorise voire assure une alimentation du dispositif de distribution en liquide lave glace. Il est à noter que le déplacement de l'organe mobile se fait par l'intermédiaire d'une surface d'appui.

Un avantage qui résulte de l'invention réside dans la modularité offerte par l'invention. En effet, le dispositif de distribution est rapportée sur le bras porte-balai, plutôt que réalisé par l'une des tiges du bras. On offre ainsi la possibilité de délivrer un premier bras porte-balai pantographe avec un dispositif de distribution de liquide lave-glace, ainsi qu'un deuxième bras porte-balai pantographe sans dispositif de distribution de liquide lave-glace, ces deux bras partageant néanmoins les même tiges et pièce de liaison. La mise en version d'un véhicule est ainsi facilitée.

Le bras porte-balai selon l'invention peut comporter en outre une ou plusieurs des caractéristiques suivantes, prises seules ou en combinaison :
- l'organe fixe comprend un circuit hydraulique comprenant au moins une entrée de liquide lave-glace et au moins une sortie de liquide lave-glace, et l'organe mobile étant mobile jusqu'à une position dans laquelle il interdit ou autorise une connexion hydraulique entre au moins une entrée de liquide lave-glace et au moins une sortie de liquide lave-glace du circuit hydraulique.
- l'organe fixe est fixé à la pièce de liaison.
- la surface d'appui forme une butée pour déplacer l'organe mobile.
- la surface d'appui correspond à au moins une partie de la tige principale ou de la tige secondaire.
- la surface d'appui correspond à un élément porté par au moins une des tiges.
- la pièce de liaison porte un dispositif de fixation d'un balai d'essuie-glace.
- le circuit hydraulique comporte au moins une entrée de liquide lave-glace et au moins deux sorties de liquide lave-glace, et en ce que l'organe mobile est mobile au moins entre une première position dans laquelle il assure une connexion hydraulique entre ladite au moins une entrée (38) et une première des sorties du circuit hydraulique (36), et une deuxième position dans laquelle il assure une connexion hydraulique entre ladite au moins une entrée et une deuxième des sorties du circuit hydraulique (36). Il pourrait également être mobile jusqu'à une troisième position, par exemple intermédiaire, située entre les première et deuxième positions précitées, dans laquelle le circuit hydraulique serait fermé.
- la ou chaque entrée ou sortie du circuit hydraulique est raccordée à un tuyau. Le tuyau est par exemple souple. Le circuit hydraulique pouvant ne comprendre qu'une seule entrée, le bras peut alors être équipé d'un seul tuyau permettant une alimentation en liquide lave-glace du dispositif de distribution, ce qui est économique et plus esthétique.
- l'organe mobile est configuré pour être déplacé dans une direction vis-à-vis de l'organe fixe par appui sur l'une des tiges ou sur un élément porté par l'une des tiges, et pour être déplacé dans une direction opposée vis-à-vis de l'organe fixe par appui sur l'autre tige ou sur l'élément.
- l'organe mobile est mobile en translation ou en rotation vis-à-vis de l'organe fixe.
- l'organe fixe est formé par un boîtier, ce boîtier comportant au moins un canal d'entrée définissant au moins une entrée de liquide lave-glace, et au moins un canal de sortie définissant au moins une sortie de liquide lave-glace.
- l'organe mobile est formé par un coulisseau.
- le coulisseau présente une forme allongée dont au moins une portion longitudinale est de plus faible section transversale que le reste du coulisseau. Une telle portion longitudinale peut définir une zone de passage du liquide lave-glace.
- le coulisseau s'étend sensiblement perpendiculairement à au moins un des canaux d'entrée et de sortie du boîtier. Ainsi, lorsque la portion longitudinale de plus faible section est située en regard des canaux d'entrée et de sortie du boîtier, le circuit hydraulique est ouvert et du liquide peut circuler de l'entrée vers la sortie du circuit.
- le coulisseau s'étend perpendiculairement à un axe d'extension principal des canaux d'entrée et/ou de sortie du boîtier.
- le dispositif de distribution comprend un aimant ou un électroaimant, l'organe mobile étant configuré pour être déplacé vis-à-vis de l'organe fixe par coopération avec cet aimant ou électroaimant. L'organe mobile est alors de préférence formé en matériau ferromagnétique ou comprend une pièce en matériau ferromagnétique destinée à coopérer avec l'aimant ou l'électroaimant.
- l'organe mobile est formé par un bouton poussoir qui est associé à un circuit électrique comportant un électroaimant, le bouton poussoir étant mobile entre une position de fermeture du circuit électrique permettant une alimentation électrique de l'électroaimant pour autoriser la distribution de liquide lave glace et une position d'ouverture du circuit électrique.
- l'électroaimant comprend un alésage axial logeant un pointeau métallique déplaçable jusqu'à une position dans laquelle il autorise la distribution de liquide lave glace.
- l'organe fixe et l'organe mobile sont au moins en partie recouverts d'un capotage. Le capotage est en particulier de protection et peut recouvrir les deux organes en partie ou en totalité.

L'invention a également pour objet un essuie-glace d'un pare-brise de véhicule, comportant un balai d'essuie-glace et un bras porte-balai tel que défini précédemment.

Selon une réalisation, le balai d'essuie-glace comprend au moins un dispositif intégré de projection de liquide lave-glace.

L'invention a également pour objet un système d'essuyage comprenant une pompe d'alimentation en liquide lave-glace et un bras porte-balai tel que défini précédemment.

Selon une réalisation, ladite pompe est configurée pour être actionnée indépendamment du déplacement de l'organe mobile.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1A, déjà décrite, est une vue d'un bras d'essuie-glace de type pantographe de l'art antérieur, décrit ci-dessus,
- la figure 1B, déjà décrite, est une vue du bras d'essuie-glace de type pantographe représenté sur la figure 1A, selon un côté longitudinal.
- la figure 2 est une vue à plus grande échelle d'une extrémité longitudinale d'un bras d'essuie-glace de type pantographe, selon un premier mode de réalisation de l'invention,
- les figures 3A et 3B sont des vues du bras de la figure 2 dans deux positions différentes, un capotage du bras ayant été retiré pour plus de clarté,
- les figures 4A et 4B sont des vues en coupe du dispositif de distribution équipant le bras de la figure 2 et plus précisément d'un boîtier incluant un coulisseau,
- les figures 5A et 5B sont des vues en coupe d'une première variante de réalisation du dispositif de distribution équipant le bras selon le premier mode de réalisation de l'invention,
- les figures 6A et 6B sont des vues correspondant aux figures 3A et 3B et représentant une deuxième variante de réalisation du dispositif de distribution équipant le bras selon le premier mode de réalisation de l'invention,
- la figure 7 est une vue en coupe d'une troisième variante de réalisation du dispositif de distribution équipant le bras selon le premier mode de réalisation de l'invention,
- les figures 8A et 8B sont des vues partiellement en coupe du dispositif de distribution équipant le bras selon un deuxième mode de réalisation de l'invention, et
- la figure 9 est une vue schématique d'un système d'essuyage comprenant un bras porte-balai pantographe selon l'invention et une pompe pour liquide lave glace.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du bras porte-balai selon l'invention. La direction longitudinale correspond à l'axe principal du bras dans lequel il s'étend, alors que les orientations latérales correspondent à des droites concourantes, c'est-à-dire qui croisent la direction longitudinale, notamment perpendiculaires à l'axe longitudinal du bras dans son plan de rotation. Pour les directions longitudinales, les dénominations extérieure ou intérieure s'apprécient par rapport au point de fixation du bras sur le véhicule, la dénomination intérieure correspondant au point le plus proche du point de fixation du bras sur le véhicule. Enfin, les directions référencées comme supérieures ou inférieures correspondent à des orientations perpendiculaires au plan de rotation du bras, la dénomination inférieure contenant le plan de la surface vitrée à essuyer, par exemple le pare-brise du véhicule.

Pour des raisons de clarté, seuls les éléments essentiels pour la compréhension de l'invention ont été représentés de manière schématique.

Dans un souci de bonne compréhension, dans la suite de l'exposé, les éléments communs aux différentes figures portent les mêmes références.

Le bras porte-balai 10 selon l'invention, tel que celui représenté à la figure 2, comprend les mêmes caractéristiques que celui représenté aux figures 1A et 1B, et comprend donc notamment une tige principale 12a et une tige secondaire 12b qui sont en l'espèce axées longitudinalement et sensiblement parallèles l'une à l'autre.

Le bras 10 comporte à son extrémité longitudinale intérieure au moins un pivot (non visible) permettant de pivoter le bras généralement autour d'un axe sensiblement perpendiculaire à un plan grossièrement défini par la surface vitrée à essuyer, ici le pare-brise. Les tiges 12a, 12b peuvent être reliées à ce pivot au moyen de manchons, tels que ceux référencés 6, 9 et représentés en figures 1A et 1B.

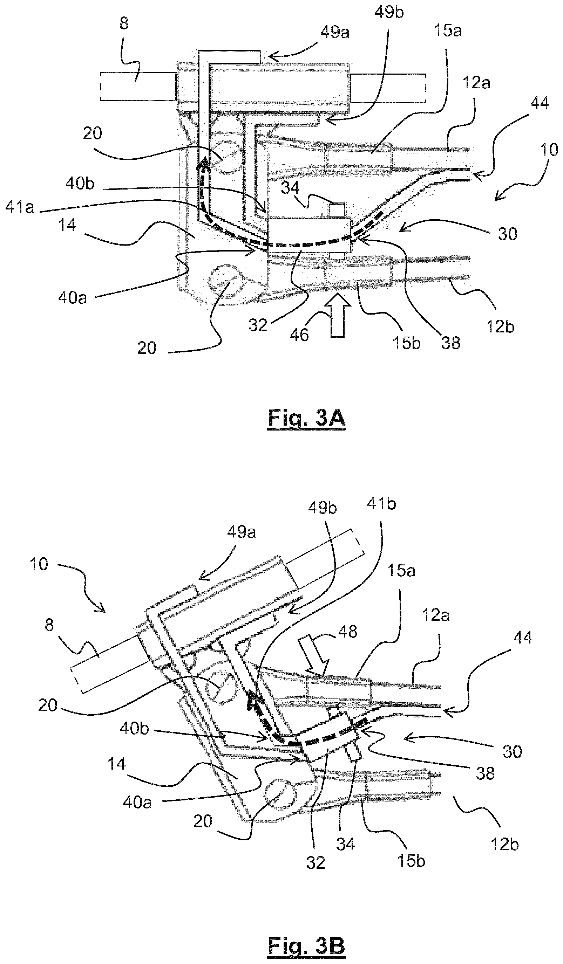

Le bras 10 comporte à son extrémité longitudinale extérieure au moins une pièce de liaison 14 (visible en figure 3A) permettant d'une part de relier entre elles les tiges 12a, 12b, et d'autre part de connecter un balai d'essuie-glace 8. Cette pièce de liaison 14 est fixée aux tiges 12a, 12b par l'intermédiaire de deux manchons 15a, 15b conformés chacun de façon à pouvoir y introduire une extrémité d'une tige 12a, 12b. Les tiges sont, par exemple, de forme rectangulaire présentant une section de 9mm sur 4mm, les manchons présentent alors des formes complémentaires pour un sertissage. Selon une variante, chaque tige 12a, 12b peut être d'un seul tenant avec son ou ses manchons 15a, 15b.

Comme on peut le voir en figure 3A ou 3B, l'extrémité extérieure de chaque tige 12a, 12b est articulée autour d'un rivet épaulé 20 porté par la pièce de liaison 14. Chaque rivet épaulé 20 traverse la pièce de liaison 14 et les axes des rivets épaulés 20 sont sensiblement parallèles.

Un moteur électrique permet d'assurer le pivotement du bras 10 qui génère un mouvement de balayage alterné. Le bras 10 est destiné à être déplacé suivant un mouvement de rotation alterné, autour d'un axe dit de balayage généralement sensiblement perpendiculaire au pare-brise. Ce pivotement du bras 10 engendre un déplacement du balai d'essuie-glace 8 pivotant autour d'un axe de rotation parallèle à l'axe des rivets épaulés 20.

Lors des déplacements du bras 10, les tiges 12a, 12b pivotent autour des axes des rivets épaulés 20 tout en restant parallèles et dans un même plan sensiblement parallèle au pare-brise. Le bras 10 est déplaçable depuis une première position d'arrêt, en général basse, jusqu'à une seconde position d'arrêt, en général haute, le débattement angulaire du bras entre ces positions extrêmes pouvant être supérieur à 90°. La figure 3A représente le bras 10 lorsqu'il est dans sa première position d'arrêt (basse) et la figure 3B le représente lorsqu'il est dans sa seconde position d'arrêt (haute). On constate que chaque tige 12a, 12b a subi une rotation de 30° environ autour de son rivet épaulé 20. Une telle rotation de 30 degrés engendre une rotation du balai d'essuie-glace de 30° par rapport au bras 1.

Le bras 10 est destiné à être équipé d'un balai d'essuie-glace 8 comportant des dispositifs intégrés de projection de liquide lave-glace sur le pare-brise. Selon l'invention, le bras 10 est équipé d'un dispositif de distribution 30 de liquide lave-glace configuré pour distribuer du liquide lave-glace aux dispositifs de projection du balai d'essuie-glace 8, tels que des rampes d'arrosage.

De manière générale, selon l'invention, le dispositif de distribution 30 comprend un premier organe, dit aussi organe fixe 32, porté par la pièce de liaison 14 ou les tiges 12a, 12b, et un second organe, dit aussi organe mobile 34. L'organe mobile 34 est mobile vis-à-vis du de l'organe fixe et est configuré pour être déplacé vis-à-vis de l'organe fixe par coopération avec la pièce de liaison 14, les tiges 12a, 12b ou avec un élément 52 porté par la pièce de liaison 14 ou les tiges 12a, 12b. L'organe fixe 34 comporte un circuit hydraulique 36 comprenant au moins une entrée 38 de liquide lave-glace et au moins une sortie 40a, 40b de liquide lave-glace. L'organe mobile 34 est déplaçable, ou mobile, jusqu'à une position dans laquelle il assure une connexion hydraulique entre l'entrée 38 et une sortie 40a, 40b du circuit hydraulique 36.

Selon un premier mode de réalisation de l'invention représenté aux figures 2 à 7, le dispositif de distribution 30 comporte un boîtier 32 formant le l'organe fixe et qui est porté par la pièce de liaison 14. Le boîtier 32 comprend un alésage formant un logement destiné à accueillir un coulisseau 34 qui forme un exemple de réalisation du second organe dit mobile. Ce coulisseau 34 a une forme allongée et est mobile en translation selon une direction rectiligne et longitudinale par rapport à l'alésage formant le logement du boîtier 32.

Selon une première variante de réalisation illustrée par les figures 3A à 4B, le circuit hydraulique 36 du boîtier 32 comprend ici une entrée 38 et deux sorties 40a, 40b. L'entrée 38 est définie par une extrémité d'un premier canal interne 31a du boîtier 32, ce canal étant sensiblement perpendiculaire au logement du coulisseau 34 et débouchant dans ce logement par son extrémité opposée à l'entrée 38. Chaque sortie 40a, 40b est définie par une extrémité d'un autre canal interne 31 b, 31 c au boîtier 32, qui est sensiblement perpendiculaire au logement du coulisseau 34 et débouche dans ce logement par son extrémité opposée à la sortie 40a, 40b correspondante.

Le boîtier 32 a ici une forme générale parallélépipédique, l'entrée 38 étant située d'un côté du boîtier et les sorties 40a, 40b étant situées d'un côté opposé au boîtier.

Le coulisseau 34 a une longueur supérieure à celle du logement du boîtier 32 de façon à ce qu'il traverse ce logement et ait toujours au moins une extrémité en saillie sur le boîtier. Comme cela sera expliqué plus en détail dans ce qui suit, chaque extrémité du coulisseau 34 comprend une surface d'appui et est destinée à coopérer par appui avec un autre élément afin de provoquer le déplacement du coulisseau dans le logement du boîtier 32, notamment par l'intermédiaire d'une mise en butée.

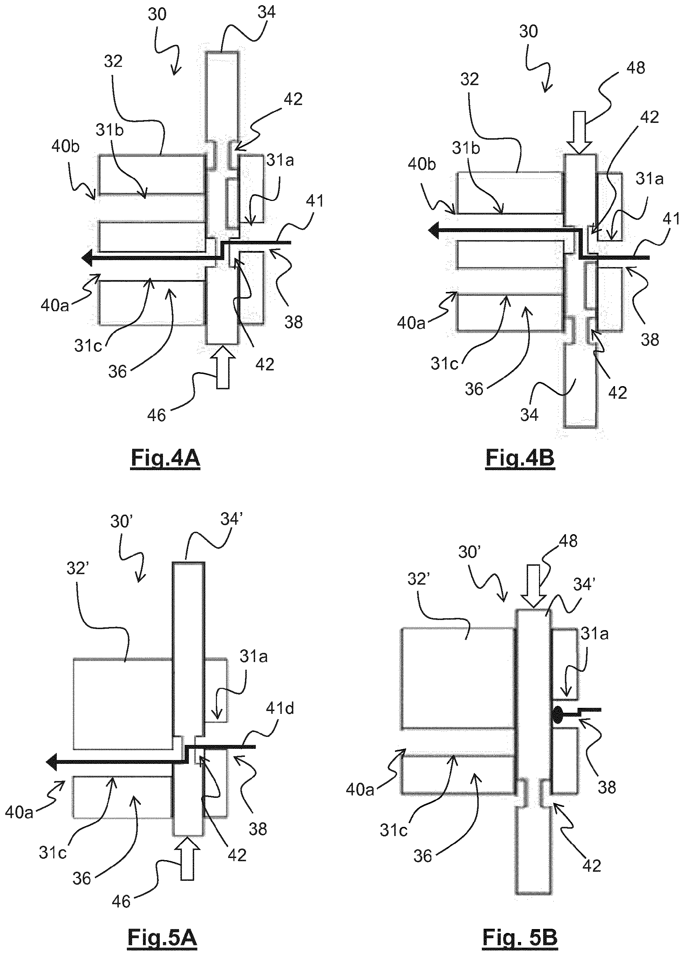

Le coulisseau 34 comprend au moins une portion longitudinale 42 de plus faible section transversale. Dans l'exemple représenté, il comporte deux portions longitudinales 42 de moindre section transversale. Les portions longitudinales 42 sont configurées, et en particulier dimensionnées et positionnées, de façon à permettre une liaison fluidique entre l'entrée 38 et l'une des sorties 40a, 40b, notamment en comprenant des évidements et/ ou en étant perpendiculaire à l'entrée 38 et aux sorties 40a, 40b. Ainsi, en référence aux figures 4A et 4B, le coulisseau 34 est déplaçable d'une première position représentée en figure 4A dans laquelle il assure une connexion hydraulique entre l'entrée 38 et la sortie 40a, comme cela est schématisé par la flèche 41 et une seconde position représentée en figure 4B dans laquelle il assure une connexion hydraulique entre l'entrée 38 et la sortie 40b, comme cela est schématisé par la flèche 41. Pour atteindre la première position de la figure 4A, une force d'appui est exercée sur une première extrémité du coulisseau 34 dans le sens de la flèche 46. Pour atteindre la seconde position de la figure 4B, une force d'appui est exercée sur l'extrémité opposée du coulisseau dans le sens de la flèche 48, opposé à celui de la flèche 46.

Le coulisseau 34 porte un ou plusieurs joints toriques d'étanchéité destinés à coopérer avec le boîtier 32.

Comme cela est visible aux figures 2, 3A et 3B, l'entrée 38 du boîtier 32 est raccordée à une extrémité d'un tuyau 44 qui est porté par le bras 10 et s'étend le long de celui-ci. L'extrémité du tuyau 44, opposée au boîtier 32, est reliée à une pompe et à un réservoir de liquide lave-glace. Chaque sortie 40a, 40b est raccordée par un conduit 49a, 49b, ou tuyau, aux dispositifs de projection du balai d'essuie-glace 8, qui est ou sont porté(s) par la pièce de liaison 14 du bras 10. Comme dans le cas représenté où le balai d'essuie-glace 8 est du type amovible, le balai d'essuie-glace 8 peut être fixé au bras 10 par l'intermédiaire d'un connecteur qui comprend alors des dispositifs de raccordement hydraulique permettant une connexion hydraulique entre les dispositifs de projection du balai d'essuie-glace 8 et les extrémités des conduits 49a, 49b. Ces dispositifs de raccordement peuvent être conçus pour raccorder d'une part le premier conduit 49a à des premiers dispositifs de projection du balai d'essuie-glace 8, tels qu'une première rampe d'arrosage, et d'autre part le deuxième conduit 49b à des seconds dispositifs de projection du balai d'essuie-glace 8, tels qu'une seconde rampe d'arrosage.

Selon l'invention, les forces d'appui exercées sur l'organe mobile, tel que le coulisseau 34, sont appliquées par des éléments du bras 10 lors de son actionnement, ce qui permet au dispositif de distribution 30 de fonctionner de manière autonome. Ainsi, comme on le voit dans l'exemple des figures 3A et 3B, lorsque le bras 10, et donc le balai d'essuie-glace 8, est dans la position basse (figure 3A), la tige secondaire 12b prend appui sur le coulisseau 34, ou forme une butée pour le coulisseau 34, et le sollicite dans la position de la figure 4A dans laquelle l'entrée 38 et la sortie 40a du boîtier sont connectées. Dans le cas où la pompe est activée, du liquide lave-glace circule alors depuis le réservoir jusqu'à une des rampes d'arrosage du balai d'essuie-glace 8 porté par le bras 10, comme cela est schématisé par la flèche 41 a. Lorsque le bras 10, et donc le balai d'essuie-glace 8, est dans la position haute (figure 3B), la tige principale 12a prend appui sur le coulisseau 34, ou forme une butée pour le coulisseau 34, et le sollicite dans la position de la figure 4B dans laquelle l'entrée 38 et la sortie 40b du boîtier 32 sont connectées. Dans le cas où la pompe est activée, du liquide lave-glace circule alors depuis le réservoir jusqu'à l'autre rampe d'arrosage du balai d'essuie-glace 8 porté par le bras 10, comme cela est schématisé par la flèche 41 b. Une position intermédiaire dans laquelle le coulisseau 34 interdit toute connexion peut également être prévue à mi-parcours entre les deux positions d'activation.

On comprend ainsi que du liquide est projeté d'un côté du balai d'essuie-glace 8, au moyen d'une première rampe d'arrosage alimentée par le premier conduit 49a, lorsque le balai d'essuie-glace 8 se déplace dans le sens montant, et du côté opposé du balai d'essuie-glace 8, au moyen de la deuxième rampe d'arrosage alimentée par le deuxième conduit 49b, lorsque le balai d'essuie-glace 8 se déplace dans le sens descendant. Comme expliqué dans ce qui précède, le liquide est projeté en avant du balai d'essuie-glace 8 (par référence à son sens de déplacement) de façon à ce qu'il soit étalé et retiré dès qu'il se dépose sur le pare-brise. Ceci évite que la vision que le conducteur a de son environnement ne soit perturbée par la projection du liquide lave glace sur le pare-brise.

Il est à noter que la pompe de liquide lave glace est configurée pour être actionnée indépendamment du déplacement de l'organe mobile, et en particulier indépendamment d'un actionnement du bras 10.

De manière générale, le bras 10 selon l'invention peut comprendre en outre un capotage 50 qui recouvre l'organe fixe et l'organe mobile pour les protéger. Ainsi, selon ce mode de réalisation, le capotage 50 recouvre le boîtier 32 et au moins une partie du coulisseau 34, du tuyau 44, et des conduits 49a, 49b pour les protéger (figure 2). Ce capotage 50 a été volontairement retiré du dessin des figures 3A et 3B pour faciliter la compréhension de l'invention.

On se réfère désormais aux figures 5A et 5B qui représentent une première variante de réalisation du dispositif de distribution 30' selon l'invention, qui sont particulièrement adaptés pour un bras 10 destiné à être équipé d'un balai d'essuie-glace 8 comportant une seule rampe d'arrosage.

Le circuit hydraulique 36 du boîtier 32' comprend ici une entrée 38 et une seule sortie 40a. L'entrée 38 du boîtier 32' est identique à celle du boîtier 32 décrit dans ce qui précède, et la sortie 40a du boîtier 32' est identique à celle du boîtier 32.

Le coulisseau 34' diffère de celui décrit dans ce qui précède en ce qu'il comprend une seule portion longitudinale 42 de plus faible section transversale, celle-ci étant configurée de façon à permettre une liaison fluidique entre l'entrée 38 et la sortie 40a. Le coulisseau 34' est déplaçable d'une première position représentée en figure 5A dans laquelle il assure une connexion hydraulique entre l'entrée 38 et la sortie 40a, comme cela est schématisé par la flèche 41d (la rampe d'arrosage du balai d'essuie-glace 8 peut alors être alimentée en liquide lave-glace), et une seconde position représentée en figure 5B dans laquelle il interdit cette connexion.

Pour atteindre la première position de la figure 5A, une force d'appui est exercée sur une première extrémité du coulisseau 34' dans le sens de la flèche 46, par exemple par la tige secondaire 12b du bras. Pour atteindre la seconde position de la figure 5B, une force d'appui est exercée sur l'extrémité opposée du coulisseau 34' dans le sens de la flèche 48, opposé à celui de la flèche 46, par exemple par la tige principale 12a du bras.

On comprend alors que du liquide est projeté, au moyen de la rampe d'arrosage, lorsque le balai d'essuie-glace 8 se déplace dans le sens montant seulement. Bien entendu, une telle description s'applique mutatis-mutandis à un balai d'essuie-glace 8 équipé d'une rampe d'arrosage agencée pour projeter un liquide quand le balai d'essuie-glace se déplace dans le sens descendant seulement.

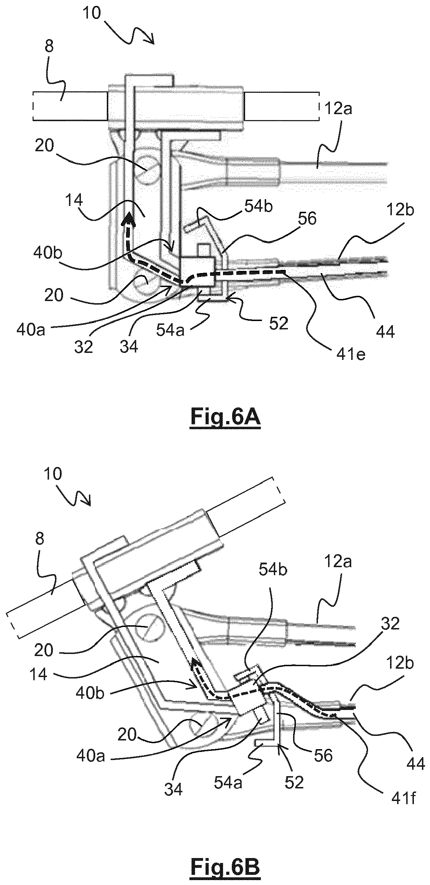

On se réfère désormais aux figures 6A et 6B qui représentent une deuxième variante de réalisation du dispositif de distribution équipant le bras 10 selon l'invention, qui diffèrent du mode de réalisation des figures 2, 3A et 3B essentiellement en ce que les forces d'appui exercées sur le coulisseau 34 ne sont pas exercées directement par les tiges 12a, 12b du bras 10 mais indirectement par un composant intermédiaire. Plus précisément, la force d'appui est ici exercée par un élément porté par au moins l'une des tiges 12a, 12b. De manière non limitative, dans l'exemple représenté, l'élément est ici porté par la tige secondaire 12b, mais pourrait tout aussi bien être porté par la tige principale 12a.

L'élément destiné à coopérer par appui avec le coulisseau 34 est ici un élément 52 en U ou en C qui comprend deux parties latérales, dont une première partie latérale 54a et une deuxième partie latérale 54b, reliées entre elles par une partie médiane 56. Chaque parties latérales 54a, 54b coopère par appui, ou butée, avec une des extrémités longitudinales du coulisseau 34. L'élément en U 52 est fixée par sa partie médiane 56 sur la tige secondaire 12b et ses parties latérales 54a, 54b sont positionnées de façon à ce qu'elles coopèrent avec le coulisseau 34 en fonction de la position du bras 10. Ainsi, comme représenté aux figures 6A et 6B, lorsque le bras 10 est dans la position basse (figure 6A), la première partie latérale 54a de la pièce 52 forme une butée pour le coulisseau 34 et le sollicite dans la position de la figure 4A dans laquelle l'entrée 38 et la première sortie 40a du boîtier 32 sont connectées. Dans le cas où la pompe est activée, du liquide lave-glace, schématisé par la flèche 41e, circule alors depuis le réservoir jusqu'à une des rampes d'arrosage du balai d'essuie-glace 8 porté par le bras 10. Lorsque le bras 10 est dans la position haute (figure 6B), la deuxième partie latérale 54b de la pièce 52 prend appui sur le coulisseau 34 et le sollicite dans la position de la figure 4B dans laquelle l'entrée 38 et la deuxième sortie 40b du boîtier 32 sont connectées. Dans le cas où la pompe est activée, du liquide lave-glace, schématisé par la flèche 41 f, circule alors depuis le réservoir jusqu'à une deuxième rampe d'arrosage du balai d'essuie-glace 8 porté par le bras 10. Ainsi, les mouvements alternatifs de la tige 12a, 12b portant l'élément en U 52 par rapport à la pièce de liaison 14 portant le boitier 32 permet d'actionner le coulisseau 34 dans le boitier 32. Bien entendu, cette variante de réalisation mettant en oeuvre un élément en U 52 peut fonctionner avec n'importe quel type de boîtier 32, 32'. Il est à noter que le tuyau 44 d'amené de liquide lave glace est porté par la tige 12a, 12b portant l'élément en U 52, ici par la tige secondaire 12b.

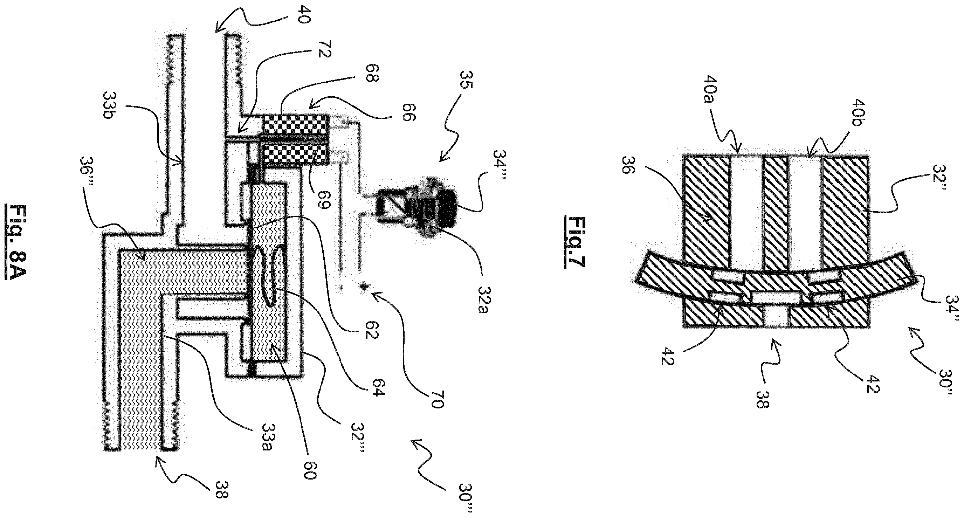

On se réfère maintenant à la figure 7 qui représente une troisième variante de réalisation du dispositif de distribution 30" selon l'invention, qui diffère du mode de réalisation des figures 4A et 4B essentiellement en ce que le coulisseau 34" est, non pas déplaçable en translation linéaire dans le logement du boîtier 32", mais déplaçable en rotation dans ce logement. Autrement dit, le coulisseau 34" est mobile suivant une direction non rectiligne, c'est-à-dire selon une courbe, dans le boîtier 32".

Le circuit hydraulique 36 du boîtier 32" est sensiblement identique à celui du boîtier 32 et comprend une entrée 38 et deux sorties 40a, 40b. Bien entendu, le circuit hydraulique 36 du boitier 32" pourrait être identique à celui du boîtier 32' comprenant une entrée 38 et une sortie 40a.

L'alésage formant le logement du boîtier 32" a une forme incurvée complémentaire de la forme incurvée du coulisseau 34" qui comprend deux portions longitudinales 42 de plus faible section transversale, comme décrit dans ce qui précède.

Le coulisseau 34" est déplaçable en rotation d'une première position dans laquelle il assure une connexion hydraulique entre l'entrée 38 et la sortie 40a, jusqu'à une deuxième position dans laquelle il assure une connexion hydraulique entre l'entrée 38 et la sortie 40b, en passant par une position intermédiaire, représentée en figure 7, dans laquelle il interdit toute connexion.

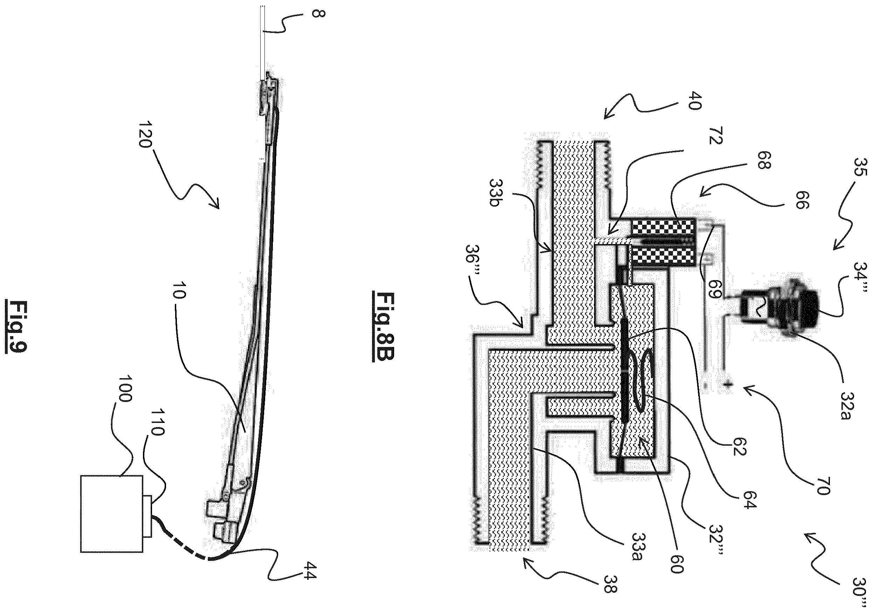

On se réfère enfin aux figure 8A et 8B qui représentent un deuxième mode de réalisation du dispositif de distribution 30'" équipant le bras 10 selon l'invention.

Le dispositif de distribution 30'" comporte un boîtier 32'" appartenant à l'organe fixe. Ce boîtier 32'" est, par exemple, porté par la pièce de liaison 14, mais pourrait tout aussi bien être placé ailleurs sur le véhicule automobile. Le boîtier 32'" comprend un circuit hydraulique 36'" comportant ici une entrée 38 et une sortie 40. L'entrée 38 est définie par une extrémité d'un premier canal interne 33a au boîtier 32, ce canal 33a ayant une forme générale en L dont l'extrémité opposée à l'entrée 38 débouche dans une chambre 60. La sortie 40 est définie par une extrémité d'un deuxième canal interne 33b au boîtier 32"', dont l'extrémité opposée débouche également dans ladite chambre 60.

La connexion hydraulique entre l'entrée 38 et la sortie 40 du boîtier peut être interrompue au niveau de la chambre 60 par une membrane 62 qui est déplaçable dans la chambre 60 entre une première position représentée en figure 8A dans laquelle elle interdit la connexion hydraulique, et une seconde position représentée en figure 8B dans laquelle elle autorise la connexion hydraulique entre le premier canal interne 33a et le deuxième canal interne 33b. La membrane 62 est sollicitée dans sa première position, interdisant la connexion hydraulique, par un ressort de rappel 64 logé dans la chambre 60.

Le déplacement de la membrane 62 est provoqué par l'intermédiaire d'un électroaimant 66 qui fait partie d'un circuit électrique comprenant notamment un interrupteur 35 et une source 70 d'alimentation électrique. L'interrupteur 35 comprend un organe mobile et un organe fixe. L'interrupteur 35 comprend par exemple un bouton poussoir 34"', formant l'organe mobile au sens de l'invention, cet organe mobile étant déplaçable entre une position dans laquelle il ferme le circuit électrique (figure 8B) et une position dans laquelle il ouvre le circuit électrique (figure 8A). L'interrupteur 35 comprend aussi le carter ou la partie fixe 32a coopérant avec le bouton poussoir 34"'. Ce carter 32a fait partie de l'organe fixe au sens de l'invention, et peut être solidaire du boîtier 32"'.

L'électroaimant 66 comprend un alésage formant un logement autorisant un déplacement d'un pointeau 68 métallique. Le pointeau métallique est déplaçable dans ce logement entre une première position basse représentée en figure 8A, dans laquelle son extrémité obture un conduit 72 autorisant un raccordement de la chambre 60 au deuxième canal 33b du boîtier 32"', et une seconde position haute représentée en figure 8B, dans laquelle la chambre 60 et le deuxième canal 33b précité sont en communication fluidique. Autrement dit, la première position du pointeau 68 interdit une circulation du fluide entre le premier canal 33a et le deuxième canal 33b, alors que la deuxième position l'autorise. Le pointeau 68 est sollicité dans sa première position par un ressort de rappel 69. Un appui sur le bouton poussoir 34"', engendrant la fermeture du circuit électrique, provoque l'alimentation électrique de l'électroaimant 66 et la génération d'un champ magnétique qui va se traduire par un déplacement du pointeau 68 depuis sa première position (figure 8A) vers sa seconde position (figure 8B).

Le pointeau 68 est de préférence formé en matériau ferromagnétique ou comprend une pièce en matériau ferromagnétique destinée à coopérer avec l'aimant ou l'électroaimant 66.

Dans le cas précité où le boîtier 32'" est porté par la pièce de liaison 14, l'une des tiges 12a, 12b du bras 10 est destinée à coopérer par appui avec le bouton poussoir 34"' pour actionner le circuit électrique et l'alimentation en liquide lave-glace du balai d'essuie-glace 8. Bien entendu, dans le cas où le boîtier 32'" est situé ailleurs sur le véhicule, l'interrupteur 35 avec son organe fixe et son organe mobile est situé sur le bras 10.

La source d'alimentation électrique 70 peut être active de façon permanente. C'est alors l'interrupteur 35, et notamment le bouton poussoir 34"', seul qui contrôle l'alimentation électrique du circuit électrique.

Dans une variante de réalisation de ce deuxième mode de réalisation (non représentée), le dispositif de distribution 30'" des figures 8A et 8B pourrait ne pas comprendre de chambre 60 et de membrane 62. La liaison fluidique entre l'entrée 38 et la sortie 40 du circuit 36'" serait alors commandée directement par le pointeau 68 mobile entre une position basse dans laquelle il obturerait un conduit de connexion hydraulique de l'entrée et de la sortie du circuit hydraulique, et une position dans laquelle il permettrait la communication fluidique entre l'entrée et la sortie du circuit par l'intermédiaire de ce conduit.

Dans encore une autre variante non représentée, l'électroaimant 66 ou un aimant permanent pourrait être porté par un élément, tel qu'une tige du bras, différent de celui portant le boîtier 32"', tel que la pièce de liaison 14. Dans ce cas, l'électroaimant serait alimenté en continu et formerait un moyen au sens de l'invention, qui coopérerait avec le pointeau formant l'organe mobile au sens de l'invention.

Selon une autre variante, le boîtier 32'" de ce deuxième mode de réalisation comprend deux sorties, alternativement alimentées en fonction de la position des tiges 12a, 12b.

Bien que le premier organe ou organe fixe du dispositif de distribution selon l'invention soit porté par la pièce de liaison du bras porte-balai dans les exemples de réalisation décrits dans ce qui précède, il est tout à fait envisageable que ce premier organe soit porté par l'une des tiges et que le second organe ou organe mobile coopère directement ou indirectement avec l'autre tige.

La figure 9 illustre un système d'essuyage 120 comprenant la pompe d'alimentation 110 en liquide lave-glace et un bras porte-balai 10. La deuxième extrémité du tuyau 44 d'amenée de liquide lave glace vers le dispositif de distribution 30 est connectée sur la pompe 110. La pompe 110 est configurée pour être actionnée indépendamment du déplacement de l'organe mobile et est configurée pour puiser du liquide lave glace dans un réservoir 100. L'invention fournie ainsi deux moyens participant du dispositif de projection, indépendants l'un vis-à-vis de l'autre puisque le dispositif de distribution est activé/désactivé par le bras, alors que la mise en circulation du liquide lave-glace est opérée par une pompe dont la mise en oeuvre est indépendante de l'actionnement du bras.

La description qui précède explique clairement comment l'invention permet d'atteindre les objectifs qu'elle s'est fixés et notamment de proposer un bras porte-balai comprenant un dispositif de distribution qui permet notamment de contrôler l'alimentation en liquide lave-glace en fonction du sens de déplacement du balai d'essuie-glace tout en offrant une solution simple, efficace et économique.

## Revendications

1. Bras porte-balai (10) pantographe pour porter un balai d'essuie-glace de véhicule, comportant au moins :
- deux tiges (12a, 12b) longitudinales, respectivement une tige principale (12a) et une tige secondaire (12b), lesdites tiges comportant des extrémités longitudinales articulées sur une pièce de liaison (14) du bras porte-balai,
- un dispositif de distribution (30, 30', 30") d'un liquide lave-glace comprenant un organe fixe (32, 32', 32", 32"'),
**caractérisé en ce que** le dispositif de distribution (30, 30', 30") comprend un organe mobile (34, 34', 34", 34"') vis-à-vis de l'organe fixe (32, 32', 32", 32"'), l'organe mobile (34, 34', 34", 34"') étant configuré pour être déplacé par l'intermédiaire d'une surface d'appui, un déplacement de l'organe mobile (34, 34', 34", 34"') permettant une distribution du liquide lave-glace.

2. Bras porte-balai (10) selon la revendication 1, **caractérisé en ce que** l'organe fixe comprend un circuit hydraulique (36) comprenant au moins une entrée (38) de liquide lave-glace et au moins une sortie (40a, 40b) de liquide lave-glace, et l'organe mobile (34, 34") étant mobile jusqu'à une position dans laquelle il interdit ou autorise une connexion hydraulique entre au moins une entrée (38) de liquide lave-glace et au moins une sortie (40a, 40b) de liquide lave-glace du circuit hydraulique (36).

3. Bras porte-balai (10) selon la revendication 1 ou 2, **caractérisé en ce que** l'organe fixe est fixé à la pièce de liaison (14).

4. Bras porte-balai (10) selon l'une des revendications précédentes, **caractérisé en ce que** la surface d'appui forme une butée pour déplacer l'organe mobile (34, 34', 34")

5. Bras porte-balai (10) selon l'une des revendications précédentes, **caractérisé en ce que** la surface d'appui correspond à au moins une partie de la tige principale (12a) ou de la tige secondaire (12b).

6. Bras porte-balai (10) selon l'une des revendications précédentes, **caractérisé en ce que** la pièce de liaison (14) porte un dispositif de fixation d'un balai d'essuie-glace.

7. Bras porte-balai (10) selon l'une des revendications précédentes prise en combinaison avec la revendication 2, **caractérisé en ce que** le circuit hydraulique (36) comporte au moins une entrée (38) de liquide lave-glace et au moins deux sorties (40a, 40b) de liquide lave-glace, et **en ce que** l'organe mobile (34, 34") est mobile au moins entre une première position dans laquelle il assure une connexion hydraulique entre ladite au moins une entrée (38) et une première des sorties (40a, 40b) du circuit hydraulique (36), et une deuxième position dans laquelle il assure une connexion hydraulique entre ladite au moins une entrée (38) et une deuxième des sorties (40a, 40b) du circuit hydraulique (36).

8. Bras porte-balai (10) selon l'une des revendications précédentes prise en combinaison avec la revendication 2, **caractérisé en ce que** la ou chaque entrée (38) ou sortie (40a, 40b) du circuit hydraulique (36) est raccordée à un tuyau (44, 49a, 49b).

9. Bras porte-balai (10) selon l'une des revendications précédentes, **caractérisé en ce que** l'organe mobile (34, 34', 34") est configuré pour être déplacé dans une direction vis-à-vis de l'organe fixe par appui sur l'une des tiges (12a, 12b) ou sur un élément (52) porté par l'une des tiges (12a, 12b), et pour être déplacé dans une direction opposée vis-à-vis de l'organe fixe par appui sur l'autre tige (12a, 12b) ou sur l'élément (52).

10. Bras porte-balai (10) selon l'une des revendications précédentes, **caractérisé en ce que** l'organe mobile (34, 34', 34", 34"') est mobile en translation ou en rotation vis-à-vis de l'organe fixe (32, 32', 32", 32"').

11. Bras porte-balai (10) selon l'une des revendications précédentes, **caractérisé en ce que** l'organe fixe (32, 32', 32", 32"') est formé par un boîtier, ce boîtier comportant au moins un canal d'entrée définissant au moins une entrée (38) de liquide lave-glace, et au moins un canal de sortie définissant au moins une sortie (40a, 40b) de liquide lave-glace.

12. Bras porte-balai (10) selon l'une des revendications précédentes, **caractérisé en ce que** l'organe mobile est formé par un coulisseau (34, 34', 34").

13. Bras porte-balai (10) selon la revendication précédente, **caractérisé en ce que** le coulisseau (34, 34', 34") présente une forme allongée dont au moins une portion longitudinale (42) est de plus faible section transversale que le reste du coulisseau.

14. Bras porte-balai (10) selon la revendication 12 ou 13 prise en combinaison de la revendication 11, **caractérisé en ce que** le coulisseau (34, 34', 34") s'étend sensiblement perpendiculairement à au moins un des canaux d'entrée et de sortie du boîtier (32, 32', 32").

15. Bras porte-balai (10) selon l'une des revendications 1 à 9, **caractérisé en ce que** le dispositif de distribution (30) comprend un aimant ou un électroaimant (66), l'organe mobile étant configuré pour être déplacé vis-à-vis de l'organe fixe par coopération avec cet aimant ou électroaimant (66).
